# EUROPÄISCHE PATENTSCHRIFT

(11) **EP 0 640 465 B1**
(45) Veröffentlichungstag und Bekanntmachung des Hinweises auf die Patenterteilung: **12.04.2000**
(21) Anmeldenummer: 94111500.8
(22) Anmeldetag: 22.07.1994
(51) Int. Cl.: B29C 65/58, B29C 61/10, H02G 3/04

(54) **Kunststoffband**
Plastic strip
Bande en matière plastique

(30) Priorität: 25.08.1993 DE 9312731 U
(43) Veröffentlichungstag der Anmeldung: 01.03.1995
(73) Patentinhaber: DSG Schrumpfschlauch GmbH & Co.KG, D-53340 Meckenheim (DE)
(72) Erfinder: Arenz, Helmut, D-53347 Alfter-Impekoven (DE)
(74) Vertreter: Grünecker, Kinkeldey, Stockmair & Schwanhäusser Anwaltssozietät

(56) Entgegenhaltungen:
- EP-A- 0 078 416
- EP-A- 0 199 349
- EP-A- 0 443 152
- DE-U- 9 312 731
- FR-A- 2 437 088
- LU-A- 59 432

## Beschreibung

Die Erfindung betrifft ein Kunststoffband der im Oberbegriff des Anspruchs 1 angegebenen Gattung. Ein solches Kunststoffband ist aus der EP-A-199 349 bekannt.

Bei diesem bekannten Band handelt es sich um eine längsgeteilte Manschette aus schrumpfbarem Material mit einem Rastverschluß entlang der Längskanten. Im Bereich der Längskanten bzw. des darin ausgebildeten Rastverschlusses ist das Material höher vernetzt als im dazwischenliegenden schrumpfenden Manschettenbereich.

Die höher vernetzten Längskantenbereiche verfügen über eine höhere mechanische Belastbarkeit als der geringer vernetzte schrumpfende Manschettenbereich.

Da sowohl die höher vernetzten Längskantenbereiche als auch der schrumpfende Zwischenbereich die gleiche chemische Zusammensetzung haben, kommt es bei Temperaturbeaufschlagung, insbesondere beim Schrumpfen, zu einem im wesentlichen gleichzeitigen Erweichen bzw. Schrumpfen aller Bandbereiche.

Der Erfindung liegt deshalb die Aufgabe zugrunde, das aus der EP-A-199 349 bekannte Kunststoffband so auszubilden, daß die zum Schrumpfen des schrumpffähigen Abschnittes benutzte Temperatur nicht zum Erweichen der beiden Randbereiche führt.

Aus der EP-A-443 152 ist ferner bereits eine längsgeteilte schlauchförmige Umhüllung aus polymerem Material bekannt, welche einen längsverlaufenden Rastverschluß aufweist.

Die obengenannte Aufgabe wird durch den Gegenstand des Anspruchs 1 gelöst.

Bevorzugte Ausführungsformen und vorteilhafte Ausgestaltungen der Erfindung sind in den Unteransprüchen angegeben.

Der mit Hilfe der Erfindung erzielbare technische Vorteil ergibt sich in erster Linie daraus, daß als Folge der unterschiedlich gewählten Kristallitschmelzpunkte die Temperaturbeaufschlagung beim Schrumpfvorgang keine unerwünschten Auswirkungen auf die Randbereiche hat.

Da die Randbereiche beim Schrumpfen nicht beeinträchtigt werden, lassen sich die in den beiden Randbereichen vorgesehenen mechanischen Verbindungseinrichtungen mühelos immer wieder öffnen und schließen.

Das erfindungsgemäße Band eignet sich insbesondere zum abschnittsweisen Ummanteln von einer Vielzahl von Leitungen aufweisenden Leitungsbündeln, wobei der ummantelte Abschnitt längswasserdicht sein und hinreichend mechanischen Schutz bieten kann. Außerdem kann durch entsprechende Farbgebung ein dekoratives Aussehen der Kunststoffummantelung herbeigeführt werden.

Durch die Kombination einer Vielzahl von erfindungsgemäßen Bändern, sei es parallel zueinander oder in Längsrichtung, ist eine sozusagen universelle Durchmessergestaltung und eine praktisch unbegrenzte Längsabmessung der Bänder erzielbar.

Die Erfindung wird im folgenden anhand von Ausführungsbeispielen und unter Bezug auf die Zeichnung näher beschrieben. In dieser zeigt:
- Fig.1: eine Ansicht des Bandes mit den an seinen beiden Außenrändern vorgesehenen mechanischen Verbindungseinrichtungen,
- Fig.2: eine Ansicht des Bandes gemaß Fig. 1, wobei die Verbindungseinrichtungen miteinander in Eingriff dargestellt sind,
- Figuren 3A und 3B: je eine Detaildarstellung einer als Aufnahmeteil sowie einer als Steckteil ausgebildeten mechanischen Verbindungseinrichtung,
- Fig.4: eine mit Fig. 1 vergleichbare Darstellung, wobei jedoch auf einer der Oberflächen eine Beschichtung aus einem Heißschmelzkleber vorgesehen ist,
- Fig.5: eine Detaildarstellung einer als Aufnahmeteil ausgebildeten mechanischen Verbindungseinrichtung,
- Fig.6: eine Detaildarstellung einer als Steckteil ausgebildeten mechanischen Verbindungseinrichtung und
- Fig.7: eine schematische Darstellung des mit dem Band nach der Erfindung herbeiführbaren Selbstverriegelungseffektes.

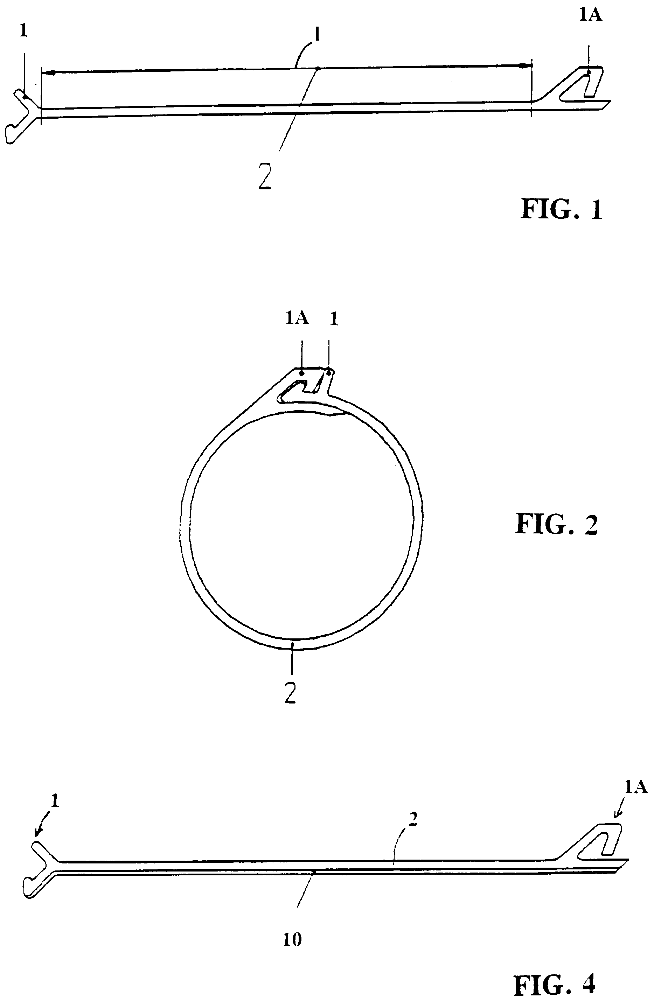

Das in Fig. 1 dargestellte Band ist in einem Extrusionsverfahren hergestellt und verfügt zu beiden Seiten eines Folienbereiches 2 über Einrichtungen 1, 1A zum wiederlösbaren, mechanischen Verbinden der Randbereiche des Bandes. Wenigstens eine der mechanischen Einrichtungen 1, 1A bzw. wenigstens einer der Bandränder, aus welchen die mechanischen Einrichtungen 1, 1A bestehen bzw. welchen diese Einrichtungen zugeordnet sind, besteht aus einem Werkstoff, der von dem Werkstoff des Folienbereiches 2 des Bandes verschieden ist.

Das Band mit seinem Folienbereich 2 sowie seinen beiden Randbereichen mit den darin ausgebildeten mechanischen Einrichtungen ist durch Extrusion hergestellt.

Der Werkstoff wenigstens eines der beiden mit den mechanischen Einrichtungen versehenen Randbereiche weist einen höheren Kristallitschmelzpunkt auf als der Folienbereich 2.

Wie in Fig. 1 dargestellt, sind die beiden gegenüberliegenden Randbereiche vorzugsweise durchgehend zu den mechanischen Verbindungseinrichtungen ausgeformt.

Wenigstens der den höheren Kristallitschmelzpunkt aufweisende Randbereich besteht aus einem vernetzbaren Polymer, wie einem Polymer auf HDPE-Basis, auf PVDF-Basis, auf LLDPE-Basis oder auf Polyamid-Basis. Der Folienbereich 2 besteht aus einem vernetzbaren Polymer, wie einem Polymer auf PE-Basis oder auf PVDF-Basis oder auf Polyamid-Basis.

Im Rahmen dieser Beschreibung werden die mit den mechanischen Einrichtungen versehenen Randbereiche auch als "verschlußbildende Teile" des Bandes bezeichnet.

Soll das Band als schrumpffähiges Band ausgebildet werden, so wird das Band nach der Herstellung vernetzt und anschließend im Bereich des Folienabschnittes, bevorzugt im Verhältnis 1:2 oder 1:3, unter Wärme verstreckt und gekühlt. In diesem Zustand kann das Band in der gleichen Weise verwendet werden wie ein Wärmeschrumpfschlauch oder wie aus einem üblichen Wärmeschrumpfschlauch hergestelltes Band.

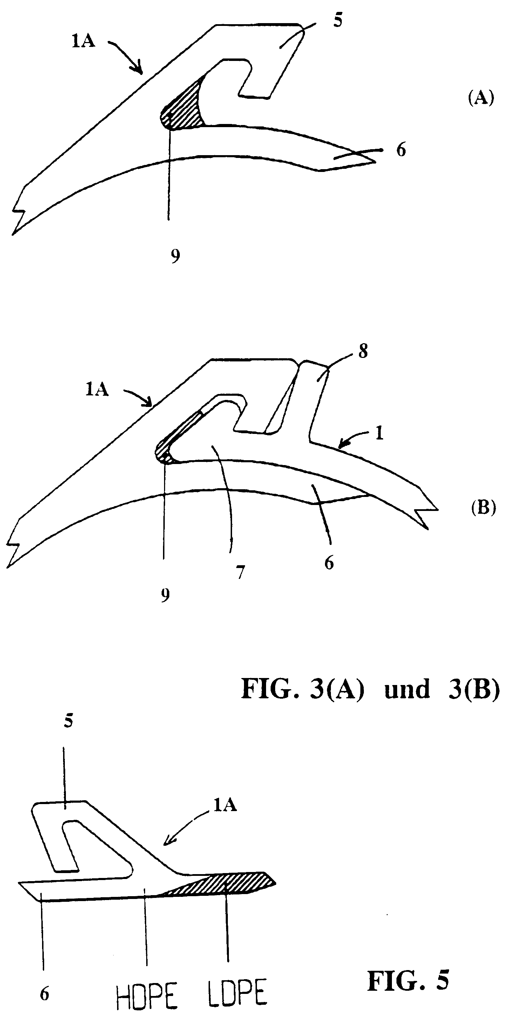

Wie im Detail in den Figuren 3A, 3B sowie 5 und 6 dargestellt, besteht die mechanische Verschlußeinrichtung des einen verschlußbildenden Teiles aus einem Aufnahmeteil 1A und besteht die mechanische Verbindungseinrichtung des anderen verschlußbildenden Bandteiles aus einem Steckteil 1.

Fig. 3A zeigt ein Aufnahmeteil 1A mit einem Krallenbereich 5 sowie einer dem Krallenbereich gegenüberliegend angeordneten Dichtlippe 6. Ferner ist in Fig. 3A sowie 3B ein Dichtmaterial 9 dargestellt, welches in dem Raum des Aufnahmeteils vorgesehen ist, der seinerseits zur Aufnahme eines vorderen hakenförmigen Teils 7 des Steckteils vorgesehen ist. Die Dichtmasse 9 besteht vorzugsweise aus Bitumen und gewährleistet, daß nach der Verarbeitung des Bandes eine hinreichende Längswasserabdichtung gewährleistet ist.

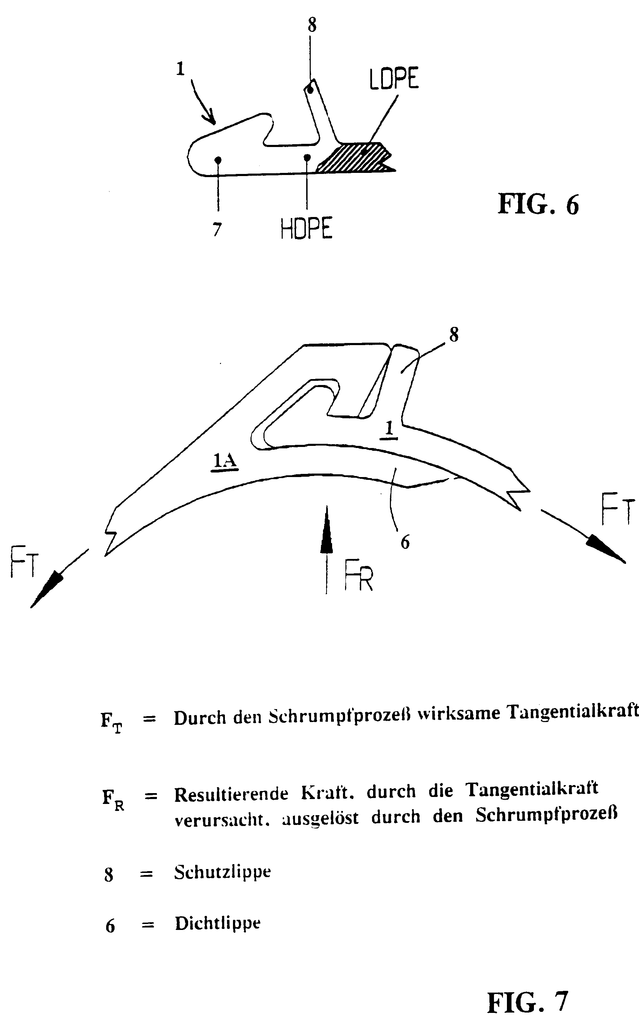

Wie am besten in den Figuren 3B sowie 6 dargestellt, besitzt das Steckteil 1 nicht nur den vorstehend genannten Haken 7, sondern diesem gegenüberliegend eine Schutzlippe 8.

Die im Aufnahmeteil 1A vorgesehene Dichtlippe 6 schützt in der in Fig. 3B dargestellten Schließstellung den Haken 7 vor einem Wegrutschen. Ferner dient die Dichtlippe 6 als Einfädelungshilfe für den Haken 7. Vorzugsweise steht die Dichtlippe 6 1 bis 2 mm über die Kralle 5 vor.

Wie in den Figuren 2 und 3B dargestellt, gestatten die Verschlußvorrichtungen 1A und 1 ein einfach zu bewältigendes Verbinden der beiden gegenüberliegenden Bandkanten, d.h. der beiden verschlußbildenden Teile des Bandes.

Wird ein solches Band (vgl. Fig. 2) anstelle eines herkömmlichen Wärmeschrumpfschlauches verwendet, so ergibt sich eine besondere Handhabungsfreundlichkeit daraus, daß ein zu ummantelndes Objekt, beispielsweise ein Kabelbündel, nicht durch einen geschlossenen Schrumpfschlauch hindurchgefädelt werden muß, sondern daß das erfindungsgemäße Band einfach um den zu ummantelnden Abschnitt herumgelegt und daß dann die Randbereiche des Bandes mit Hilfe der mechanischen Verbindungseinrichtungen 1 und 1A miteinander verbunden werden.

Die am Steckteil dem Haken 7 gegenüberliegende Schutzlippe 8 schützt den Krallenabschnitt 5 des Aufnahmeteils gegen ein unbeabsichtigtes Öffnen.

Wie in Fig. 4 dargestellt, kann das Band einschließlich der verschlußbildenden Randbereiche zusätzlich mit einem Heißschmelzkleber beschichtet sein und zwar über seine gesamte Länge oder lediglich über Teillängen. Die Länge des Folienbereiches 2 ist in Fig. 1 mit dem Bezugszeichen 1 bezeichnet. Gemäß Fig. 4 ist jedoch unter der Gesamtlänge des Bandes nach der Erfindung nicht nur die Länge 1, sondern zusätzlich die Länge der beiden verschlußbildenden Randabschnitte 1 und 1A zu verstehen. Der Kristallitschmelzpunkt des Schmelzklebers soll in dem Bereich des Kristallitschmelzpunktes des Folienteils 2 liegen. Bevorzugt sind Heißschmelzkleber auf PA-Basis sowie EVA-Basis. Eine solche Heißkleberbeschichtung hat den Zweck, die Abdichtwirkung, die Isolierwirkung sowie die Klebewirkung zu unterstützen.

Der Heißschmelzkleber wird bei dem Schrumpfprozeß aktiv, so daß das Band einschließlich seiner verschlußbildenden Ränder eine gas- und wasserdichte Umhüllung bildet.

Die vorstehend erwähnte Schutzlippe 8 übernimmt außer der Sicherungsfunktion gegenüber unbeabsichtigtem Öffnen des Krallenbereiches 5 noch eine Dichtfunktion gegen das Eindringen von Schmutz und anderen Stoffen in den Verschlußbereich.

In Fig. 7 sind mit dem Bezugszeichen F_{T} die durch den Schrumpfprozeß ausgelösten wirksamen Tangentialkräfte bei geschlossenen Verbindungsteilen dargestellt. Mit dem Bezugszeichen F_{R} ist die resultierende Kraft aus den beiden Tangentialkräften dargestellt, wie sie sich, ausgelöst durch einen Schrumpfprozeß, ergibt. Aus Fig. 7 wird deutlich, daß durch die wirksam werdenden Schrumpfkräfte eine Selbstverriegelung der beiden mechanischen Verbindungseinrichtungen 1 sowie 1A ergibt.

Grundsätzlich muß das Band nach der Erfindung nicht als Band bzw. Folie hergestellt werden. Das Band kann statt dessen in Schlauchform extrudiert worden sein, wobei der Haken mit der Dichtlippe verbunden ist und eine Trennung erst nach dem Recken erfolgt.

Bänder nach der Erfindung können nebeneinanderliegend zu einer Vielzahl von Bändern mit Hilfe der mechanischen Verschlußeinrichtungen zusammengefügt werden, so daß auch große Durchmesser von zu ummantelnden Objekten bewältigt werden können.

## Patentansprüche

1. Schrumpffähiges Kunststoffband mit in seinen beiden Randbereichen vorgesehenen Einrichtungen (1, 1A) zum wieder lösbaren mechanischen Verbinden der beiden Randbereiche und mit einem zwischen diesen Randbereichen vorgesehenen Folienabschnitt (2), wobei der Kunststoff der Randbereiche und der Kunststoff des Folienbereiches Eigenschaftsunterschiede aufweisen, **dadurch gekennzeichnet**, daß der Kunststoff der Randbereiche bzw. der darin vorgesehenen Einrichtungen (1, 1A) einen höheren Kristallitschmelzpunkt aufweist als der Kunststoff des sich zwischen den beiden Randbereichen erstreckenden Folienabschnittes (2).

2. Kunststoffband nach Anspruch 1, **dadurch gekennzeichnet**, daß wenigstens einer der Randbereiche aus einem vernetzbaren Polymer, wie einem Polymer auf HDPE-Basis oder LLDPE-Basis oder PVDF-Basis oder Polyamid-Basis besteht.

3. Kunststoffband nach Anspruch l oder 2, **dadurch gekennzeichnet**, daß der Folienbereich (2) aus einem vernetzbaren Polymeren, wie einem Polymeren auf PE-Basis oder PVDF-Basis oder Polyamid-Basis besteht.

4. Kunststoffband nach einem der Ansprüche 1 bis 3, **dadurch gekennzeichnet**, daß das Band einschließlich der mechanischen Verbindungseinrichtungen (1, 1A) durch Extrusion hergestellt ist.

5. Kunststoffband nach einem der Ansprüche 1 bis 4, **dadurch gekennzeichnet**, daß das Band vernetzt und anschließend im Bereich des Folienabschnittes (2) vorzugsweise im Verhältnis 1:2 oder 1:3 unter Wärme verstreckt und gekühlt worden ist, wodurch der Folienabschnitt (2) wärmeschrumpfend gemacht ist.

6. Kunststoffband nach einem der Ansprüche 1 bis 4, **dadurch gekennzeichnet**, daß die mechanischen Verbindungseinrichtungen des einen Randbereiches als Aufnahmeteil (1A) und die mechanische Verbindungseinrichtung des anderen Randbereiches als Steckteil (1) ausgebildet sind.

7. Kunststoffband nach Anspruch 6, **dadurch gekennzeichnet**, daß das Aufnahmeteil (1A) eine Kralle (5) sowie eine der Kralle gegenüberliegende Dichtlippe (6) aufweist.

8. Kunststoffband nach Anspruch 6, **dadurch gekennzeichnet**, daß das Steckteil (1) einen im Aufnahmeteil aufnehmbaren Haken (7) und eine dem Haken gegenüberliegende Schutzlippe (8) aufweist.

9. Kunststoffband nach den Ansprüchen 7 und 8, **dadurch gekennzeichnet**, daß das Aufnahmeteil in einem für den Haken (7) des Steckteils (1) vorgesehenen Raum ein Dichtmaterial (9), vorzugsweise Bitumen, aufweist.

10. Kunststoffband nach einem der Ansprüche 1 bis 9, **dadurch gekennzeichnet**, daß wenigstens ein Teilbereich des Bandes auf wenigstens einer Oberfläche eine Beschichtung (10) aus einem Heißschmelzkleber aufweist.

11. Kunststoffband nach Anspruch 10, **dadurch gekennzeichnet**, daß der Kristallitschmelzpunkt des Heißschmelzklebers im Bereich des Kristallitschmelzpunktes des Folienabschnittes (2) liegt.

## Claims

1. Shrinkable plastic strip having arrangements (1, 1A) provided in its two marginal regions for the re-releasable mechanical connection of the said two marginal regions, and having a sheeting section (2) provided between the said marginal regions, the plastic of the marginal regions and the plastic of the sheeting region having differences in characteristics, **characterised in that** the plastic of the marginal regions, or of the arrangements (1, 1A) provided therein, has a higher crystallite melting point than the plastic of the sheeting section (2) extending between the two marginal regions.

2. Plastic strip according to claim 1, **characterised in that** at least one of the marginal regions consists of a cross-linkable polymer, such as a polymer based on HDPE or LLDPE or PVDF or polyamide.

3. Plastic strip according to claim 1 or 2, **characterised in that** the sheeting region (2) consists of a cross-linkable polymer, such as a polymer based on PE or PVDF or polyamide.

4. Plastic strip according to one of claims 1 to 3, **characterised in that** the strip, including the mechanical connecting arrangements (1, 1A), is manufactured by extrusion.

5. Plastic strip according to one of claims 1 to 4, **characterised in that** the strip has been cross-linked and then drawn under heat in the region of the sheeting section (2), preferably in a ratio of 1:2 or 1:3, and cooled, as a result of which the said sheeting section (2) is made heat-shrinking.

6. Plastic strip according to one of claims 1 to 4, **characterised in that** the mechanical connecting arrangements on the one marginal region are constructed as a receiving part (1A) and the mechanical connecting arrangements on the other marginal region are constructed as a plug-in part (1).

7. Plastic strip according to claim 6, **characterised in that** the receiving part (1A) has a claw (5) and also a sealing lip (6) lying opposite the said claw.

8. Plastic strip according to claim 6, **characterised in that** the plug-in part (1) has a hook (7) which can be received in the receiving part, and a protective lip (8) which lies opposite the said hook.

9. Plastic strip according to claims 7 and 8, **characterised in that** the receiving part has a sealing material (9), preferably bitumen, in a compartment provided for the hook (7) of the plug-in part (1).

10. Plastic strip according to one of claims 1 to 9, **characterised in that** at least one partial region of the strip has a coating (10) of a hot-melting adhesive on at least one surface.

11. Plastic strip according to claim 10, **characterised in** that the crystallite melting point of the hot-melting adhesive lies in the region of the crystallite melting point of the sheeting section (2).

## Revendications

1. Bande en matière plastique rétractable comprenant des dispositifs (1, 1A) prévus dans ses deux zones d'extrémités pour la liaison mécanique toujours amovible des deux zones d'extrémités et comprenant un tronçon de feuille (2) prévu entre ces deux zones d'extrémités, où la matière plastique des zones d'extrémités et la matière plastique de la zone de la feuille présentent des différences de propriétés,
caractérisée en ce que la matière plastique des zones d'extrémités ou des dispositifs (1, 1A) prévus dans ces zones d'extrémités présente un point de fusion de la cristallite plus élevé que la matière plastique du tronçon (2) de la feuille s'étendant entre les deux zones d'extrémités.

2. Bande en matière plastique selon la revendication 1, caractérisée en ce que au moins une des zones d'extrémités se compose d'un polymère réticulable tel qu'un polymère à base de polyéthylène haute densité (HDPE) ou à base de polyéthylène basse densité (LDPE) ou à base de polyfluorure de vinylidène (PVDF) ou à base de polyamide.

3. Bande en matière plastique selon la revendication 1 ou 2, caractérisée en ce que la zone (2) de la feuille se compose d'un polymère réticulable tel qu'un polymère à base de polyéthylène (PE) ou à base de polyfluorure de vinylidène (PVDF) ou à base de polyamide.

4. Bande en matière plastique selon l'une quelconque des revendications 1 à 3, caractérisée en ce que la bande, y compris les dispositifs mécaniques (1, 1A) de jonction, est fabriquée par extrusion.

5. Bande en matière plastique selon l'une quelconque des revendications 1 à 4, caractérisée en ce que la bande est réticulée puis, dans la zone du tronçon (2) de la feuille, est étirée à chaud, de préférence suivant un rapport de 1:2 ou de 1:3, et refroidie, grâce à quoi le tronçon (2) de la feuille devient thermorétractable.

6. Bande en matière plastique selon l'une quelconque des revendications 1 à 4, caractérisée en ce que les dispositifs mécaniques de jonction de l'une des zones d'extrémités est configurée comme une partie femelle (1A), le dispositif mécanique de jonction de l'autre zone d'extrémité étant configuré comme une partie mâle (1).

7. Bande en matière plastique selon la revendication 6, caractérisée en ce que la partie femelle (1A) présente une griffe (5) ainsi qu'une lèvre d'étanchéité (6) placée à l'opposé de la griffe.

8. Bande en matière plastique selon la revendication 6, caractérisée en ce que la partie mâle (1) présente un crochet (7) pouvant s'introduire dans la partie femelle et comportant une lèvre de protection (8) placée à l'opposé du crochet.

9. Bande en matière plastique selon les revendications 7 et 8, caractérisée en ce que la partie femelle présente, dans un espace prévu pour le crochet (7) de la partie mâle (1), un matériau d'étanchéité (9), de préférence du bitume.

10. Bande en matière plastique selon l'une quelconque des revendications 1 à 9, caractérisée en ce que au moins une zone partielle de la bande présente, sur au moins une surface, un revêtement (10) se composant d'une colle thermoplastique.

11. Bande en matière plastique selon la revendication 10, caractérisée en ce que le point de fusion de la cristallite de la colle thermoplastique se trouve dans la plage du point de fusion de la cristallite du tronçon (2) de la feuille.
